(19) Europäisches Patentamt / European Patent Office / Office européen des brevets

(11) **EP 2 574 957 B1**

(12) **FASCICULE DE BREVET EUROPEEN**

(45) Date de publication et mention de la délivrance du brevet:
**27.04.2016 Bulletin 2016/17**

(51) Int Cl.:
*G01S 13/53* *(2006.01)* *G01S 13/90* *(2006.01)*

(21) Numéro de dépôt: **12186289.0**

(22) Date de dépôt: **27.09.2012**

(54) **Procédé d'estimation de la fréquence doppler non ambigue d'une cible mobile, notamment marine, et radar mettant en oeuvre le procédé**

Verfahren zur Abschätzung der unzweideutigen Dopplerfrequenz eines beweglichen Ziels, insbesondere im Meer, und Radar, das dieses Verfahren anwendet

Method for estimating the unambiguous Doppler frequency of a moving target, in particular marine, and radar implementing said method

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.09.2011 FR 1102964**

(43) Date de publication de la demande:
**03.04.2013 Bulletin 2013/14**

(73) Titulaire: **Thales**
**92400 Courbevoie (FR)**

(72) Inventeurs:
- **Bosser, Luc**
 **78120 Rambouillet (FR)**
- **Lafaix, Julien**
 **78150 Le Chesnay (FR)**
- **Porges, Tristan**
 **75015 Paris (FR)**

(74) Mandataire: **Lucas, Laurent Jacques et al**
**Marks & Clerk France**
**Conseils en Propriété Industrielle**
**Immeuble Visium**
**22, Avenue Aristide Briand**
**94117 Arcueil Cedex (FR)**

(56) Documents cités:
**EP-A1- 1 326 091    US-A- 5 977 905**

- **HU XIUJUAN ET AL: "An adaptive compensation of moving target doppler shift for airborne radar", AEROSPACE CONFERENCE, 2009 IEEE, IEEE, PISCATAWAY, NJ, USA, 7 mars 2009 (2009-03-07), pages 1-6, XP031450058, ISBN: 978-1-4244-2621-8**

EP 2 574 957 B1

**Description**

La présente invention concerne le domaine technique de l'imagerie radar, en particulier les modes d'imagerie radar connus sous l'acronyme anglo-saxon SAR (Synthetic Aperture Radar).

L'invention concerne plus précisément l'estimation non ambiguë de la fréquence Doppler d'une cible mobile à partir d'un radar, par exemple embarqué sur un porteur en mouvement.

L'invention s'applique avantageusement à l'imagerie de cibles marines à partir d'un radar aéroporté.

L'invention s'applique également aux modes d'imagerie de types ISAR (Inverse Synthetic Aperture Radar).

De façon générale, l'invention concerne tout radar dont le faisceau reste pointé sur une cible d'intérêt unique pendant toute la durée d'acquisition. Cette cible doit constituer le seul ensemble de réflecteurs éclairé par le faisceau radar.

D'une manière générale, un radar imageur a pour fonction principale de réaliser une discrimination en distance et en fréquence Doppler des réflecteurs que comporte une cible située dans le faisceau du radar. Pour être exploitable, cette représentation Distance-Doppler doit pouvoir discriminer les réflecteurs avec une finesse suffisante suivant les deux axes distance et Doppler. On parle de résolution distance et de résolution Doppler. Suivant l'axe distance, la résolution la plus fine atteignable est inversement proportionnelle à la largeur de bande émise par le radar. Suivant l'axe Doppler, la résolution la plus fine atteignable est inversement proportionnelle à la durée pendant laquelle la cible est éclairée par le radar. L'obtention d'une résolution Doppler fine requiert donc une durée d'illumination de la cible longue. Or, durant cette durée d'illumination, la distance entre le radar et la cible évolue. On parle de migration Distance pour désigner ce phénomène. Pour des durées d'illumination longues, cette migration distance ne peut pas être considérée comme négligeable vis à vis de la résolution Distance. Par conséquent, cette migration distance doit être compensée pour obtenir au final une représentation Distance-Doppler où l'énergie de chacun des réflecteurs reste contenue à l'intérieur d'une seule cellule de résolution distance, cellule appelée également case distance.

De façon classique, la connaissance de la fréquence Doppler d'un réflecteur permet généralement de corriger le terme linéaire de sa migration en distance au cours de l'éclairement. En effet, la vitesse de déplacement de la cible relativement au radar, encore appelée vitesse de rapprochement, se déduit directement de sa fréquence Doppler.

Cependant, la mesure de la fréquence Doppler est ambiguë avec une valeur d'ambigüité qui est égale à la fréquence de récurrence du mode radar. Cette fréquence de récurrence correspond à la fréquence de répétition utilisée par le radar pour émettre périodiquement l'ensemble de la bande nécessaire à l'obtention de la résolution distance. Dans le cas d'une forme d'onde classique, pour laquelle chaque impulsion est émise dans l'ensemble de la bande utile, cette fréquence de récurrence correspond à la fréquence de répétition des impulsions. Si l'on considère le signal collecté par le radar dans une case Distance donnée, impulsion après impulsion, cette fréquence de récurrence définit donc la valeur de l'ambigüité avec laquelle l'analyse spectrale, permettant d'estimer les fréquences Doppler des différents réflecteurs, sera effectuée. L'analyse spectrale, effectuée généralement par Transformée de Fourier sur chacun des signaux contenus à l'intérieur d'une case distance, ne permet pas de faire la distinction entre deux échos dont les fréquences Doppler sont espacées d'un multiple de la fréquence de récurrence.

En outre, pour des radars de type SAR, la fréquence de récurrence des impulsions émises est généralement basse et comme aucune information sur la cinématique de la cible n'est disponible à priori, le rang d'ambigüité de la fréquence Doppler n'est donc pas connu et une simple analyse spectrale ne permet pas de lever cette ambigüité.

La connaissance de la vitesse de déplacement du réflecteur au cours de l'acquisition du radar est d'autant plus importante lorsque le signal radar utilisé respecte une forme d'onde de type « échelons de fréquence » ou « step-frequency » en anglais. Dans ce cas, l'émission radar dans la bande de fréquence utile n'est plus réalisée en émettant périodiquement une même impulsion couvrant l'intégralité de la bande fréquentielle. Cette impulsion est remplacée par un motif d'impulsions élémentaires, dans lequel chaque impulsion élémentaire est émise uniquement sur une subdivision de la bande fréquentielle totale. Le regroupement par traitement de l'ensemble des sous-bandes associées à chacune des impulsions élémentaires du motif permet au final de reconstituer la bande totale émise, pour atteindre la résolution distance désirée. Pour ce type de signaux radars, sur la durée d'émission d'un motif, la variation de distance de la cible induit une rotation de phase sur le signal reçu et démodulé pour chaque impulsion élémentaire du motif. Cette phase doit être corrigée pour obtenir un profil distance correctement résolu.

Une solution connue permettant d'estimer et de compenser la vitesse de déplacement de la cible consiste à réaliser une estimation à partir de plusieurs acquisitions successives de profils distance qui fournissent, pour une récurrence donnée, la puissance du signal rétrodiffusé en fonction de la distance entre la cible et le radar. Une récurrence correspond à une réalisation de l'émission de l'intégralité de la bande radar, nécessaire pour obtenir la résolution distance souhaitée. Cette réalisation peut s'effectuer à l'aide d'une impulsion unique, couvrant l'intégralité de la bande utile, ou bien à l'aide d'un motif constitué d'impulsions élémentaires, chacune des impulsions élémentaires étant émise dans une partie de la bande totale. Ce processus d'émission radar dans la bande totale, se répète périodiquement avec une fréquence appelée fréquence de récurrence. Le terme linéaire de la migration en distance de la cible au cours du temps et de l'éclairement par le radar peut être calculé en estimant le décalage en distance entre le premier profil distance collecté et le dernier, et en divisant le résultat par l'espacement temporel entre les deux profils. Le décalage en distance est généralement estimé en corrélant les deux profils distance les plus éloignés temporellement et en relevant la position du pic de corrélation.

Cette solution classique présente deux inconvénients importants. Tout d'abord, elle nécessite un espacement temporel significatif entre les deux profils distance extrêmes pour atteindre la précision désirée sur l'estimation de la vitesse de déplacement de la cible et donc indirectement une durée d'éclairement importante. De plus, cette solution s'accommode mal d'une variation de l'allure du profil distance entre le début et la fin de l'acquisition radar. Par allure du profil, on entend la forme du profil, c'est-à-dire la puissance reçue en fonction de la distance, sur un axe distance gradué à l'aide de cases distance, le profil étant associé à une récurrence donnée. Or cette variabilité de profil est souvent observée pour une cible en mouvement constituée d'une pluralité de réflecteurs élémentaires.

En résumé, la précision conférée par cette solution n'est pas optimale.

Les documents suivants: « An adaptive compensation of moving target Doppler shift for airborne radar, AEROSPACE CONFERENCE, 2009 IEEE, IEEE, PISCATAWAY, NJ, USA, 7 mars 2009 (2009-03-07), pages 1-6, XPO31450058, ISBN: 978-1 -4244-2621-8 », EP 1 929 091 A1 et US 5 977 905 A proposent également des méthodes d'estimation de fréquence Doppler applicables aux radars aéroportés mais ne proposent pas de solution efficace permettant de compenser l'ambigüité de la fréquence Doppler d'une cible mobile.

La présente invention vise à remédier aux limitations des solutions connues en proposant un procédé permettant de lever l'ambigüité sur la fréquence Doppler en exploitant uniquement le début de l'acquisition du signal rétrodiffusé sur une durée très courte et un faible nombre de récurrences. Ainsi, l'estimation de la fréquence Doppler peut être réalisée avant la fin de l'acquisition complète.

De plus, le procédé selon l'invention permet d'améliorer significativement la robustesse vis-à-vis des variabilités de profils distance au cours de l'acquisition.

L'invention s'applique avantageusement aux signaux radars respectant une forme d'onde de type « step-frequency », ou plus généralement aux formes d'onde pour lesquelles la qualité de la réponse impulsionnelle en distance, après compression d'impulsion est tributaire de la connaissance de la fréquence Doppler de l'écho dont on cherche à estimer la distance.

L'invention a notamment pour objet un procédé d'estimation de la fréquence Doppler non ambiguë $fd_c$ d'une cible mobile éclairée par un faisceau de signaux radar émis sous la forme d'une pluralité de motifs d'impulsions à une fréquence de répétition $f_m$ donnée, chaque motif comportant une pluralité d'impulsions élémentaires régulièrement espacées temporellement, chaque impulsion élémentaire occupant une bande de fréquence centrée sur une fréquence différente, ledit procédé comportant une étape d'acquisition dudit signal rétrodiffusé par la cible et étant caractérisé en ce qu'il comporte en outre les étapes suivantes :

- une étape, exécutée pour chaque motif reçu, de correction des erreurs de phase parasite impactant chaque impulsion élémentaire d'un motif, de compression des impulsions dudit motif et de correction des migrations de la cible en distance et en fréquence Doppler, sous hypothèse que la fréquence Doppler $fd_c$ de ladite cible est égale à celle du point $M_0$ du sol vers lequel pointe le faisceau radar, ladite étape aboutissant à l'élaboration d'un signal en deux dimensions représentant le signal reçu en fonction d'une part de la distance entre la cible et le radar et d'autre part du motif reçu,
- une étape de calcul d'une transformée de Fourier directe sur ledit signal issu de l'étape afin d'obtenir une représentation en deux dimensions du spectre du signal reçu en fonction d'une part de la distance entre la cible et le radar et d'autre part de la fréquence Doppler,
- une étape de détermination de la fréquence Doppler ambiguë $fdA_c$ de la cible à partir de ladite représentation spectrale,
- une étape de recentrage de ladite représentation spectrale et d'ajustement desdites corrections réalisées à l'étape à partir de ladite fréquence Doppler ambiguë $fdA_c$, de sorte à obtenir une image radar de ladite cible,
- une étape de détermination du rang d'ambiguïté de la fréquence Doppler $fdA_c$, comme celui, parmi les rangs possibles, permettant d'obtenir l'image radar de plus haut degré de focalisation.

Dans une variante de réalisation de l'invention, le faisceau radar est généré selon une forme d'onde « step-frequency ».

Dans une variante de réalisation de l'invention, le degré de focalisation d'une image radar est déterminé par un calcul du contraste ou de l'entropie de l'image.

Dans une variante de réalisation de l'invention, les rangs d'ambiguïté possibles sont choisis entre deux valeurs extrêmes dépendantes de la vitesse maximale de la cible.

Dans une variante de réalisation de l'invention, l'étape d'acquisition du signal rétrodiffusé est réalisée sur une durée réduite.

Dans une variante de réalisation de l'invention, ledit radar met en oeuvre un mode SAR ou ISAR.

Dans une variante de réalisation de l'invention, ledit radar est embarqué sur un porteur mobile, par exemple un aéronef.

Dans une variante de réalisation de l'invention, ladite cible est une cible marine.

L'invention a également pour objet un radar à impulsions caractérisé en ce qu'il comporte des moyens adaptés à mettre en oeuvre le procédé selon l'invention.

D'autres caractéristiques et avantages de l'invention apparaîtront à l'aide de la description qui suit faite en regard de dessins annexés qui représentent :

- la figure 1, une représentation géométrique illustrant le problème d'estimation de la fréquence Doppler selon l'invention,
- la figure 2, plusieurs diagrammes illustrant une partie des étapes de compression distance à l'aide d'une forme d'onde step-frequency », étapes réalisés en l'absence de mouvement relatif entre le radar et les réflecteurs de la cible
- la figure 3, un organigramme des étapes de mise en oeuvre du procédé selon l'invention,
- la figure 4, deux images radar obtenues lors d'étapes intermédiaires du procédé selon l'invention,
- la figure 5, plusieurs images radar illustrant la dernière étape du procédé selon l'invention.

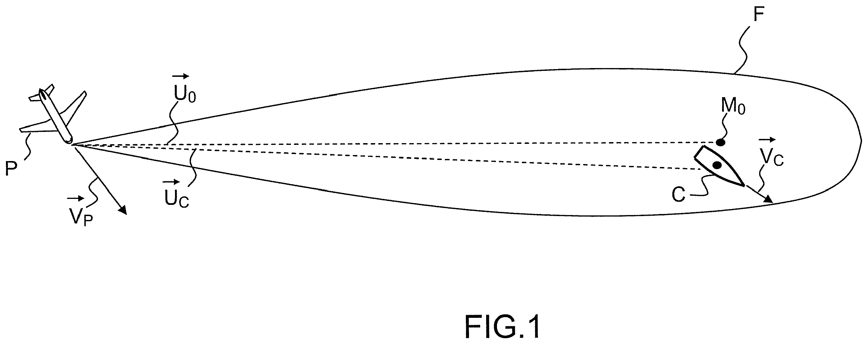

La figure 1 illustre, sur un schéma, une application d'imagerie radar. Un radar est embarqué sur un porteur P, par exemple un aéronef qui se déplace à une vitesse $\vec{V}_P$. Le radar émet un signal diffusé dans un faisceau F qui illumine une cible mobile C, par exemple une cible maritime, se déplaçant à la vitesse $\vec{V}_C$. Le faisceau du radar pointe vers un point du sol $M_0$. Sur la figure 1, les points P et C se réfèrent respectivement à la position du centre de phase de l'antenne du radar et à la position du centre de gravité de la cible. On désigne par $\vec{U}_0$ le vecteur unitaire pointant vers le point $M_0$, $\vec{U}_0 = \vec{PM}_0/\|\vec{PM}_0\|$ et par $\vec{U}_C$ le vecteur unitaire pointant vers la cible $\vec{U}_C = \vec{P}_C/\|\vec{P}_C\|$. La fréquence Doppler $fd_0$ au point $M_0$ est donnée par la relation $fd_0 = \dfrac{2}{\lambda}\vec{V}_P.\vec{U}_0$ où $\lambda$ désigne la longueur d'onde associée à la fréquence centrale d'émission F de la forme d'onde ($\lambda = c/F$). La fréquence Doppler $fd_c$ au centre de gravité C de la cible est donnée par la relation

$$fd_C = \frac{2}{\lambda}\left(\vec{V}_P - \vec{V}_c\right).\vec{U}_C$$

. Un des objectifs de l'invention est d'estimer cette grandeur sans information a priori sur la vitesse de la cible mis à part un majorant de son module.

La technique connue de l'imagerie radar distance/fréquence d'une cible est résumée ci après.

Un radar à impulsions émet, pendant une durée d'éclairement donnée, une succession d'impulsions, ou de motifs d'impulsions, à destination d'une cible, présente dans le faisceau du radar. Ces impulsions, ou motifs d'impulsions, sont identiques et transmises périodiquement avec une fréquence de récurrence ou de motif $f_m$ donnée. Si le nombre de motifs d'impulsions émis est égal à N, le temps d'éclairement de la cible vaut $T=N/f_m$. Le signal émis par le radar à impulsions est réfléchi sur la cible, plus précisément en différents points de cette cible qui constituent des réflecteurs, et est renvoyé vers le radar qui réalise une acquisition de ces signaux rétrodiffusés. En exploitant d'une part le retard entre le signal émis et le signal réfléchi puis reçu et d'autre part la phase du signal reçu, il est possible d'en déduire une estimée de la distance radiale entre le radar et la cible ainsi que de la fréquence Doppler de la cible qui est directement liée à sa vitesse de rapprochement.

Le signal rétrodiffusé et reçu par le radar est échantillonné à une période d'échantillonnage $T_e$ donnée. Dans le cas simplifié d'une forme d'onde classique, sans compression d'impulsion, cette période d'échantillonnage est légèrement inférieure à la durée d'impulsion. En l'absence de traitement de compression distance, cette dernière valeur définit la capacité de discrimination en distance du radar. Le signal échantillonné est mémorisé dans un tableau dont chaque colonne contient les échantillons du signal reçu pour une récurrence, c'est-à-dire une impulsion émise Les échantillons du signal reçu sont identifiés par leurs instants de réception puis par leur retard vis-à-vis de l'émission de l'impulsion de la récurrence associée. On obtient ainsi un tableau distance/récurrence qui contient les échantillons complexes (amplitude et phase) du signal reçu. La phase mesurée sur l'impulsion réfléchie est proportionnelle à la fréquence Doppler du réflecteur, ainsi, en réalisant une transformée de Fourier selon l'axe des récurrences, on obtient un tableau distance/fréquence qui est directement utilisé pour imager la cible. Les pics d'amplitude dans ce tableau permettent de localiser en distance et en fréquence les réflecteurs de la cible.

La résolution en distance des mesures effectuées est directement proportionnelle à la durée de l'impulsion émise. Plus la durée de l'impulsion est courte, plus la résolution sera faible et plus il sera possible de localiser précisément la cible. D'une manière plus générale, la résolution la plus fine atteignable en distance est inversement proportionnelle à la bande fréquentielle du signal émis par le radar. L'émission dans une bande large peut s'effectuer en émettant des impulsions très courtes non modulées, dans ce cas, la bande du signal émis est égale à l'inverse de la durée d'impulsion. Cependant, travailler avec des impulsions très courtes est pénalisant en termes de portée car la quantité d'énergie ainsi transmise est faible. Pour pallier ce problème, une technique connue, notamment dans le domaine des radars et plus généralement dans le domaine du traitement de signal, consiste à réaliser une compression d'impulsion en émettant le signal dans une bande large sur une durée d'impulsion longue, par exemple en modulant la fréquence émise à l'intérieur de l'impulsion. En réception, le signal est comprimé en réalisant un filtrage adapté.

Après compression d'impulsion sur le signal reçu, la résolution en distance $\delta x_r$ est inversement proportionnelle à la largeur de bande fréquentielle B de l'impulsion : $\delta x_r = c/(2B)$, où c est la vitesse de la lumière. Après démodulation par la fréquence centrale du signal émis, le signal rétro-diffusé doit être échantillonné à une fréquence d'échantillonnage supérieure à la largeur de bande B et ce pour respecter le théorème de Shannon. Pour obtenir une résolution en distance suffisamment fine la largeur de bande B doit donc être conséquente ce qui impose une fréquence d'échantillonnage du signal reçu également très élevée ce qui peut poser un problème de réalisation matérielle.

Pour pallier ce problème, il est connu d'utiliser pour transmettre le signal radar, une forme d'onde de type « step-frequency » qui consiste à remplacer l'impulsion principale par un motif composé de plusieurs impulsions élémentaires de bande réduite et régulièrement espacées temporellement à l'intérieur du motif. Un nombre K d'impulsions couvre alors la même bande fréquentielle totale B que l'impulsion d'origine mais une impulsion élémentaire aura une occupation spectrale égale à B/K. Chaque impulsion élémentaire est par ailleurs modulée avec une fréquence centrale $F_k$ différente pour chaque impulsion qui compose un motif regroupant les K impulsions dont la réunion des bandes en fréquences est égale à la bande en fréquence de l'impulsion d'origine. La réunion des K spectres fréquentiels du motif couvre, sans discontinuité, une largeur de bande totale égale à B, autorisant une résolution radiale égale à c/2B. A la réception, le signal rétrodiffusé par la k-ième impulsion du motif est démodulé par la fréquence $F_k$. La fréquence d'échantillonnage du signal reçu est ainsi diminuée d'un facteur K par rapport à celle nécessaire si cette forme d'onde n'est pas utilisée.

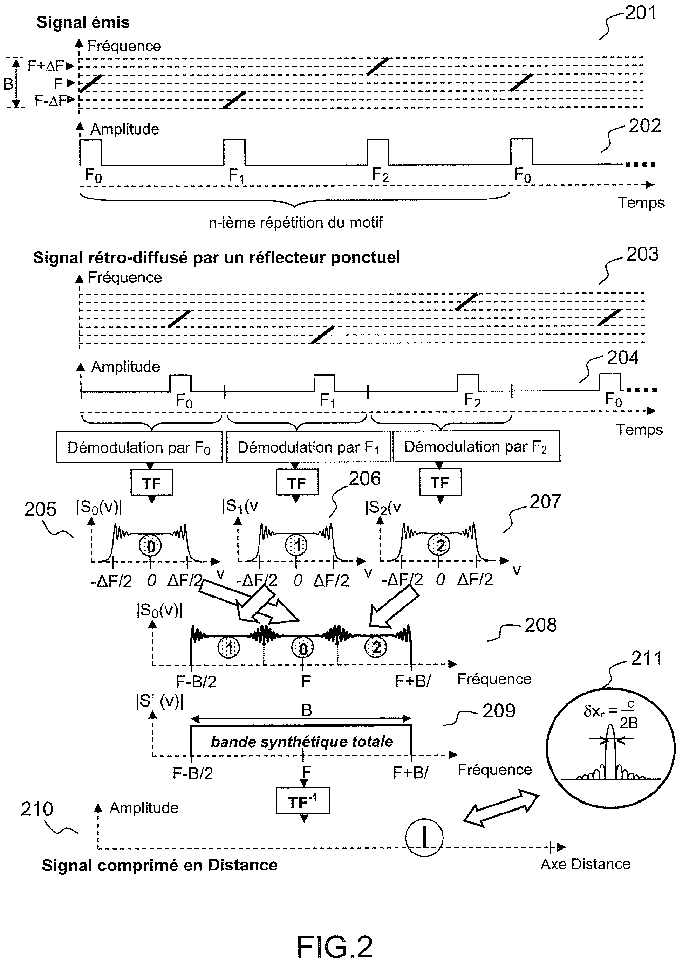

La figure 2 illustre sur plusieurs diagrammes, les étapes principales de compression d'impulsion réalisées par un radar utilisant une forme d'onde de type step-frequency, en l'absence de mouvement relatif entre le radar et les réflecteurs de la cible.

Les diagrammes 201 et 202 schématisent la génération d'un motif d'impulsions composé de trois impulsions espacées régulièrement dans le temps, chacune étant émise sur une fréquence $F_0$, $F_1$, $F_2$ différentes. Dans l'exemple de la figure 201, $F_0$ est égale à F, $F_1$ est égale à F- $\Delta$F et $F_2$ est égale à F+ $\Delta$F, où F est la fréquence centrale d'émission et $\Delta$F un écart fréquentiel prédéterminé.

Les diagrammes 203 et 204 schématisent le signal rétro-diffusé par un réflecteur et reçu par le radar. Les K signaux reçus (dans l'exemple K=3) sont chacun démodulés selon leurs fréquences $F_0$, $F_1$, $F_2$ respectives et les trois spectres $S_0$, $S_1$, $S_2$, représentés aux figures 205,206,207 sont déterminés en réalisant une transformée de Fourier directe. Chaque spectre a une largeur de bande égale à $\Delta$F. Après recombinaison 208, la bande synthétique totale du signal est reformée pour créer un spectre S(v) qui balaye toutes les fréquences du signal émis. L'opération suivante 209 consiste à effectuer un filtrage adapté en multipliant le spectre S(v) par le conjugué d'un spectre de calibration noté C(v) et qui correspond au spectre synthétique associé à un écho ponctuel parfait situé à distance nulle. Afin de compenser les fluctuations résiduelles d'amplitude sur le spectre ainsi obtenu, le résultat est divisé par le module au carré $\|C(v)\|^2$ du spectre C(v). L'impulsion comprimée, telle que schématisée sur les diagrammes 210 et 211 est finalement obtenue en réalisant une transformée de Fourier inverse sur le spectre synthétique filtré couvrant une bande totale B.

Dès lors qu'il existe un mouvement relatif entre le radar et les réflecteurs, la compression d'impulsion pour une forme d'onde « step-frequency » doit intégrer une opération supplémentaire pour garantir une réponse impulsionnelle de bonne qualité.

En effet, puisque les $K$ impulsions du motif sont émises à des instants différents, la distance $D_k$ entre le radar et les réflecteurs évolue d'impulsion à impulsion au sein même du motif. La variation de cette distance $D_k$ est donnée, au premier ordre, par la relation $\Delta D_k = k \times V_R \times T_r$, où $V_R$ désigne la vitesse de rapprochement du réflecteur et $T_r$ la période de répétition des impulsions. Si cette variation de distance $\Delta D_k$ est négligeable par rapport à la résolution distance visée, elle induit en revanche une rotation de phase significative sur le signal reçu et démodulé.

Pour la k-ième impulsion du motif, cette rotation de phase est donnée par la relation suivante :

$$\Delta\varphi_k = \frac{4\pi}{\lambda_k}\Delta D_k = 2\pi\frac{F_k}{F}\times fd_M \times k \times T_r \quad (1)$$

, où $fd_M$ désigne la fréquence Doppler du réflecteur.

Cette rotation de phase est une rotation de phase parasite et doit donc être compensée pour assurer la qualité de la réponse impulsionnelle en distance. Pour ce faire, il est donc nécessaire de connaître la fréquence Doppler du réflecteur.

Si une erreur $\varepsilon_f$ est commise sur l'estimation de cette fréquence Doppler, chaque spectre élémentaire $S_k(v)$

est entaché d'une rotation de phase parasite résiduelle $\varepsilon\varphi_k = 2\pi\dfrac{F_k}{F}\times\varepsilon_f\times k\times T_r$. La présence de cette rotation de phase parasite résiduelle se traduit par une dégradation de la qualité de la réponse impulsionnelle en distance, plus ou moins marquée suivant la valeur de $\varepsilon_f$.

Un des objectifs de l'invention est précisément de compenser ces rotations de phase parasite en réalisant une estimation de la fréquence Doppler non ambiguë.

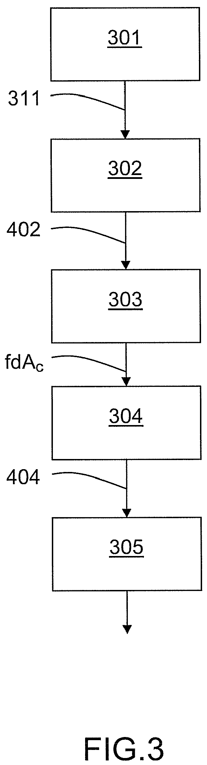

La figure 3 représente un organigramme des étapes de mise en oeuvre du procédé selon l'invention.

Les étapes de traitement successives permettant d'aboutir à une estimation non ambiguë de la fréquence Doppler de la cible sont avantageusement effectuées sur une durée d'acquisition T' réduite par rapport à la durée d'éclairage T totale du radar. Le signal de durée T' exploité comporte N' répétitions du motif émis. Un motif est constitué d'un nombre K d'impulsions régulièrement espacées temporellement de façon à occuper une bande fréquentielle totale B. Sur une telle durée courte, il est raisonnable d'envisager l'hypothèse selon laquelle tous les réflecteurs de la cible migrent en distance et en fréquence Doppler de façon identique. En effet, les différences de migrations entre différents réflecteurs de la cible sont négligeables vis-à-vis respectivement de la résolution en distance $\delta x_r$ et de la résolution en fréquence Doppler 1/T' atteignables.

Dans une première étape 301, une hypothèse initiale sur la fréquence Doppler du centre de gravité de la cible $fd_c$ est prise égale à celle $fd_0$ du point $M_0$ vers lequel pointe le faisceau du radar.

A la réception de chaque motif comportant K impulsions rétrodiffusées, une compression d'impulsions est réalisée en corrigeant, pour chaque impulsion d'indice k, la phase de l'impulsion par la rotation de phase $\Delta\varphi_k$ déterminée par la relation (1) avec $fd_M = fd_0$ la fréquence Doppler au point $M_0$. Comme explicité précédemment cette fréquence dépend de la longueur d'onde du signal et de la vitesse du porteur et est donnée par la relation $fd_0 = \dfrac{2}{\lambda}\vec{V}_P.\vec{U}_0$.

Une fois l'impulsion comprimée, une correction des migrations en distance et en fréquence Doppler est réalisée, toujours en se focalisant sur le point $M_0$. La correction de la migration en distance consiste à compenser le déplacement de la cible, relativement au radar, au cours de l'acquisition du signal rétrodiffusé. De façon similaire, la correction de la migration en fréquence Doppler consiste à compenser les variations éventuelles de fréquence au cours de l'acquisition. Les corrections de migration sont adaptées au point $M_0$ et dépendent principalement de la vitesse du porteur et de son angle avec la direction de pointage du faisceau radar, le point $M_0$ étant supposé fixe.

A l'issu de cette première étape 301, un signal 311 « distance-motifs » est obtenu représentant pour chaque motif d'impulsions, l'amplitude de l'impulsion comprimée et corrigée en distance et fréquence d'après des lois de migrations adaptées au point $M_0$ comme illustré sur le diagramme 210 de la figure 2.

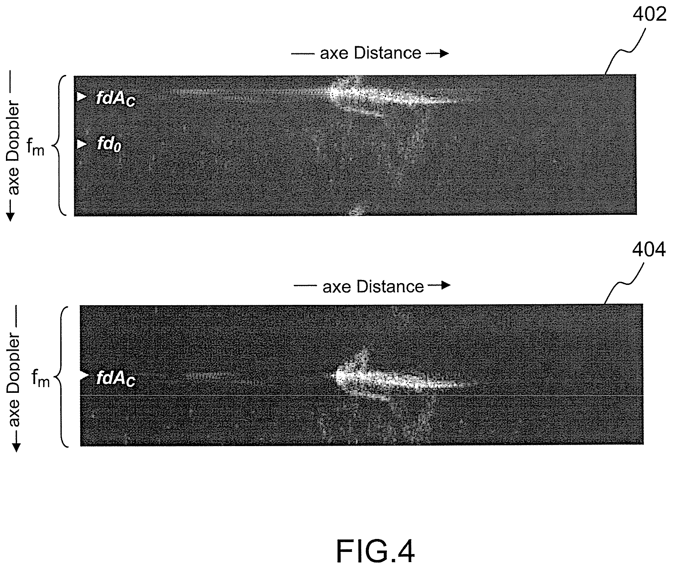

Dans une étape successive 302, une transformée de Fourier est appliquée au tableau distance/motifs, selon l'axe des motifs. En sortie de l'étape 302, on obtient une représentation distance/fréquence Doppler de la cible qui constitue une image radar. Une telle image 402 est représentée sur la figure 4 pour une cible correspondant à un navire. La dimension selon l'axe fréquentiel de l'image 402 est égale à la fréquence $f_m$ de répétition d'un motif d'impulsions. Cette dernière valeur correspond également à l'ambigüité Doppler. La fréquence Doppler $fd_0$ au point $M_0$ est située au milieu de l'axe. La fréquence Doppler $fdA_c$ du centre de la cible vue par le radar, c'est-à-dire la fréquence Doppler correcte à une ou plusieurs ambigüités prêt, est telle que $|fdA_c - fd_0| \leq f_m/2$. Cette fréquence est estimée à une ambigüité prêt. La valeur de l'ambigüité Doppler correspond à la fréquence $f_m$ de répétition. La fréquence Doppler réelle de la cible est en réalité égale à $fdA_c + \varepsilon_{RA}.f_m$, avec $\varepsilon_{RA}$ un nombre entier positif, négatif ou nul. Cette incertitude de mesure résulte du fait que la fréquence Doppler est en fait déterminée à partir d'une analyse spectrale effectuée sur un signal échantillonné avec une fréquence $f_m$.

Lorsque les fréquences $fdA_c$ et $fd_0$ sont différentes, on observe sur l'image radar 402 les caractéristiques suivantes. Les réflecteurs de la cible sont mal comprimés en distance et présentent une migration résiduelle parasite en distance et en fréquence Doppler. Cependant, puisque l'intégration est réalisée sur une durée T' courte, cette migration résiduelle peut être considérée commune à l'ensemble des réflecteurs de la cible.

L'image 402, obtenue après transformée de Fourier directe, permet d'obtenir, dans une troisième étape 303, une première estimée de la fréquence Doppler ambigüe $fdA_c$ du centre de gravité de la cible. Celle-ci est obtenue en sommant en puissance les cases distance de l'image 402 distance/fréquence Doppler puis en relevant la position du maximum de puissance sur le spectre résultant.

Dans une étape 304 successive, l'image radar 402 est recentrée sur la fréquence $fdA_c$ préalablement déterminée, en appliquant un décalage circulaire suivant l'axe des fréquences Doppler. En outre, les rotations de phase résiduelles $\Delta\varphi_k$ entre les K spectres élémentaires de la bande synthétique sont compensées, pour toutes les fréquences comprises entre $fdA_c - f_m/2$ et $fdA_c + f_m/2$ à l'aide de la relation (1) et de l'estimée $fdA_c$. La correction des migrations en distance et en fréquence Doppler effectuées à l'étape 301 sont ajustées en prenant en compte la différence entre la fréquence Doppler ambiguë de la cible $fdA_c$ et celle $fd_0$ du point $M_0$. Une nouvelle image radar 404 est obtenue en sortie d'étape 304, elle est représentée à la figure 4.

A ce stade, les réflecteurs composant la cible présentent la même qualité de réponse impulsionnelle en distance. L'erreur de phase parasite résiduelle qui impacte la bande synthétique totale du signal est commune à l'ensemble des réflecteurs et ne dépend plus que de l'erreur $\varepsilon_{RA}$ commise sur le rang d'ambiguïté de la fréquence Doppler estimée. Cette erreur de phase résiduelle est donnée par la relation (2) pour le spectre élémentaire $S_k(v)$.

$$\varepsilon\varphi_k = 2\pi \frac{F_k}{F} \times \varepsilon_{RA} \times f_m \times k \times T_r = 2\pi \frac{F_k}{F} \times \varepsilon_{RA} \times \frac{k}{K} \quad (2)$$

Si l'erreur $\varepsilon_{RA}$ n'est pas un multiple du nombre K d'impulsions composant un motif, alors la phase du signal est dégradée dans le cas contraire, la rotation de phase parasite n'est pas apparente car quasiment multiple de $2\pi$.

Les réflecteurs imagés sont en outre entachés d'une migration résiduelle $m_d$ en distance dépendant également de cette erreur de rang d'ambiguïté $\varepsilon_{RA}$ ainsi que du numéro de motif n parmi les N' motifs exploités par le procédé.

$$m_d = \frac{\lambda}{2} \times \varepsilon_{RA} \times f_m \times \frac{n}{N'} T', \text{ avec } n \in \left[0, N'-1\right]. \text{ (3)}$$

Cette erreur de migration en distance est apparente quelle que soit la valeur de l'erreur commise sur le rang d'ambiguïté $\varepsilon_{RA}$ et en particulier même si cette erreur est un multiple du nombre K d'impulsions.

Dans une étape finale 305, le procédé selon l'invention consiste à déterminer le rang d'ambiguïté $\varepsilon_{RA}$ en testant le degré de focalisation de chaque image radar obtenue en compensant la phase et la migration en distance pour une valeur du rang d'ambiguïté parmi toutes celles possibles, c'est-à-dire pour $\varepsilon_{RA}$ variant entre deux valeurs extrêmes $\varepsilon_{Ramin}$ et $\varepsilon_{Ramax}$. Ces deux valeurs extrêmes dépendent au premier ordre de l'incertitude sur la vitesse de la cible. Par défaut, il s'agit de la vitesse maximale atteignable par la cible. Dans le cas de cibles marines, cette valeur reste faible ce qui limite le nombre de rangs d'ambiguïté possibles. Dans l'exemple choisi pour illustrer le procédé selon l'invention, on teste les valeurs comprises entre -K et K. L'image radar présentant le meilleur degré de focalisation est retenue ainsi que l'hypothèse utilisée pour le rang d'ambiguïté. Le degré de focalisation d'une image est par exemple déterminé en calculant son contraste, c'est-à-dire la variance de l'amplitude des pixels la composant ou encore en calculant son entropie.

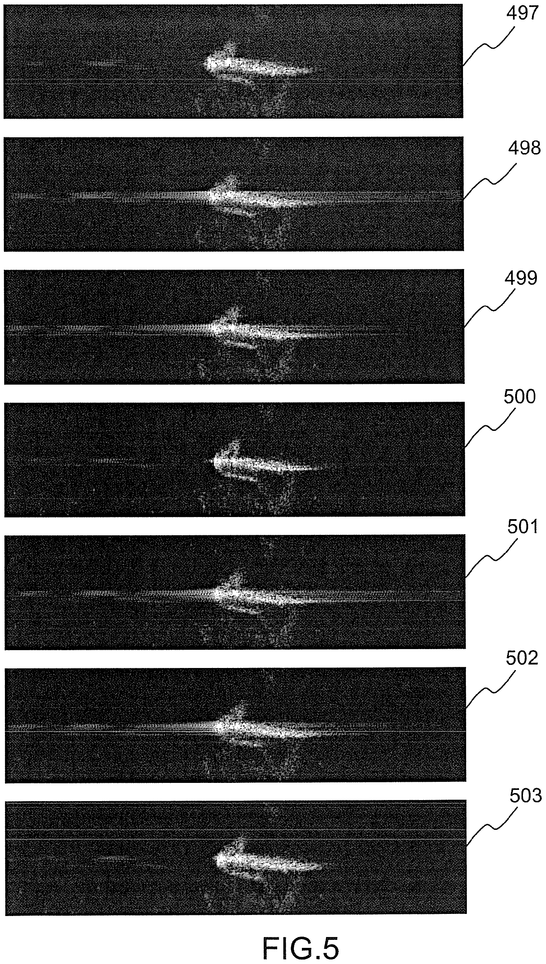

La figure 5 schématise les différentes images radars, ou images distance/fréquence Doppler, obtenus à l'étape 305 après compensation de la rotation de phase résiduelle et de la migration en distance, sous l'hypothèse que la fréquence Doppler centrale de la cible est égale à $fd_c = fdA_c + \varepsilon_{RA}.f_m$ avec $\varepsilon_{RA}$ variant entre -K et K. Dans l'exemple de la figure 5, K est pris égal à 3, ce qui correspond également à l'exemple de la figure 2, et le rang d'ambiguïté réel est égal à 0. Ce qui signifie que la fréquence Doppler réelle du centre de gravité de la cible est égale à la fréquence Doppler ambiguë $fd_c = fdA_c$. L'image radar 500 correspond à une hypothèse de rang d'ambiguïté nul, c'est-à-dire à la fréquence Doppler réelle de la cible. Le signal représenté sur cette image 500 n'est pas impacté par des erreurs de rotation de phase due à une mauvaise compensation des impulsions du motif reçu ni par des erreurs de migration en distance parasite. L'image 500 résultante est correctement focalisée sur la cible.

Les images radar 498,499,501,502 sont obtenues respectivement pour des rangs d'ambiguïté égaux à -2,-1,1 et 2, c'est-à-dire que la fréquence Doppler du centre de gravité de la cible est respectivement égale à $fd_c = fdA_c -2.f_m$, $fd_c = fdA_c -f_m$, $fd_c = fdA_c +f_m$ et $fd_c = fdA_c +2.f_m$. Les images radar 498,499,501,502 présentent des lobes secondaires de niveau élevé sur la réponse impulsionnelle du signal selon l'axe des distances, ces lobes sont identifiés sur les images radar par un spectre diffus, le long de l'axe des distances.

Les images radar 497 et 503 sont obtenues respectivement pour des rangs d'ambiguïté égaux à -3 et 3, c'est-à-dire que la fréquence Doppler du centre de gravité de la cible est respectivement égale à $fd_c = fdA_c -3.f_m$ et $fd_c = fdA_c +3.f_m$. Ces erreurs sur le rang d'ambiguïté n'influent pas sur le résultat de la compression d'impulsion mais entrainent cependant une erreur parasite sur la migration en distance de l'ordre de huit fois la résolution en distance.

L'image présentant le degré de focalisation le plus élevé est l'image 500 qui correspond à une hypothèse correcte de la fréquence Doppler du centre de gravité de la cible et qui ne présente donc pas d'artefacts liés à une mauvaise compression d'impulsion ou une mauvaise correction de la migration en distance.

Sans sortir du cadre de l'invention, la détermination du degré de focalisation d'une image radar peut être réalisée à l'aide de tout moyen équivalent au calcul du contraste ou de l'entropie.

L'invention s'applique à tout radar à impulsions, notamment de type SAR, mais également de type ISAR (Inverse Synthetic Aperture Radar).

**EP 2 574 957 B1**

## Revendications

1. Procédé d'estimation de la fréquence Doppler non ambiguë $fd_c$ d'une cible mobile éclairée par un faisceau radar émis sous la forme d'une pluralité de motifs d'impulsions à une fréquence de répétition $f_m$ donnée, chaque motif comportant une pluralité d'impulsions élémentaires régulièrement espacées temporellement, chaque impulsion élémentaire occupant une bande de fréquence centrée sur une fréquence différente, ledit procédé comportant une étape d'acquisition du signal rétrodiffusé par la cible et étant **caractérisé en ce qu'**il comporte en outre les étapes suivantes :

   • une première étape (301), exécutée pour chaque motif reçu, de correction des erreurs de phase parasite impactant chaque impulsion élémentaire d'un motif, de compression des impulsions dudit motif et de correction des migrations de la cible en distance et en fréquence Doppler, sous hypothèse que la fréquence Doppler $fd_c$ de ladite cible est égale à celle du point ($M_0$) du sol vers lequel pointe le faisceau radar, ladite étape (301) aboutissant à l'élaboration d'un signal (311) en deux dimensions représentant le signal reçu en fonction d'une part de la distance entre la cible et le radar et d'autre part du motif reçu,
   • une deuxième étape (302) de calcul d'une transformée de Fourier directe sur ledit signal (311) issu de ladite première étape (301) afin d'obtenir une représentation (402) en deux dimensions du spectre du signal reçu en fonction d'une part de la distance entre la cible et le radar et d'autre part de la fréquence Doppler,
   • une troisième étape (303) de détermination de la fréquence Doppler ambiguë $fdA_c$ de la cible à partir de ladite représentation (402) spectrale,
   • une quatrième étape (304) de recentrage de ladite représentation (402) spectrale et d'ajustement desdites corrections réalisées à ladite première étape (301) à partir de ladite fréquence Doppler ambiguë $fdA_c$, de sorte à obtenir une image radar (404) de ladite cible,
   • une cinquième étape (305) de détermination du rang d'ambiguïté de la fréquence Doppler $fdA_c$, comme celui, parmi les rangs d'ambiguïté possibles, permettant d'obtenir l'image radar (500) de plus haut degré de focalisation.

2. Procédé selon la revendication 1 **caractérisé en ce que** le faisceau radar est généré selon une forme d'onde « step-frequency ».

3. Procédé selon l'une des revendications précédentes **caractérisé en ce que** le degré de focalisation d'une image radar est déterminé par un calcul du contraste ou de l'entropie de l'image.

4. Procédé selon l'une des revendications précédentes **caractérisé en ce que** les rangs d'ambigüité possibles sont choisis entre deux valeurs extrêmes dépendantes de la vitesse maximale de la cible.

5. Procédé selon l'une des revendications précédentes **caractérisé en ce que** l'étape d'acquisition du signal rétrodiffusé est réalisée sur une durée réduite.

6. Procédé selon l'une des revendications précédentes **caractérisé en ce que** ledit radar met en oeuvre un mode SAR ou ISAR.

7. Procédé selon l'une des revendications précédentes **caractérisé en ce que** ledit radar est embarqué sur un porteur mobile.

8. Procédé selon la revendication 7 **caractérisé en ce que** ledit porteur mobile est un aéronef.

9. Procédé selon l'une des revendications précédentes **caractérisé en ce que** ladite cible est une cible marine.

10. Radar à impulsions **caractérisé en ce qu'**il comporte des moyens adaptés à mettre en oeuvre le procédé selon l'une des revendications précédentes.

## Patentansprüche

1. Verfahren zum Schätzen der eindeutigen Doppler-Frequenz $fd_c$ eines beweglichen Ziels, das von einem Radarstrahl beleuchtet wird, der in Form von mehreren Impulsmustern mit einer gegebenen Wiederholfrequenz $f_m$ emittiert wird, wobei jedes Muster mehrere Elementarimpulse umfasst, die zeitlich gleichmäßig voneinander beabstandet sind, wobei jeder Elementarimpuls ein auf einer anderen Frequenz zentriertes Frequenzband belegt, wobei das Verfahren

8

einen Schritt des Erfassens des von dem Ziel zurückgestreuten Signals beinhaltet und **dadurch gekennzeichnet ist, dass** es ferner die folgenden Schritte beinhaltet:

- einen ersten Schritt (301), ausgeführt für jedes empfangene Muster, des Korrigierens von jedem Elementaumpuls eines Musters beeinflussenden Störphasenfehlern, des Komprimierens von Impulsen des Musters und des Korrigieren von Abwanderungen von dem Ziel nach Distanz und nach Doppler-Frequenz, unter der Annahme, dass die Doppler-Frequenz $fd_c$ des Ziels gleich der des Punkts ($M_0$) am Boden ist, auf den der Radarstrahl zeigt, wobei der Schritt (301) in der Erzeugung eines zweidimensionalen Signals (311) resultiert, das das empfangene Signal repräsentiert, einerseits in Abhängigkeit von der Distanz zwischen dem Ziel und dem Radar und andererseits in Abhängigkeit von dem empfangenen Muster;
- einen zweiten Schritt (302) des Berechnens einer direkten FourierTransformation an dem vom ersten Schritt (301) kommenden Signal (311), um eine zweidimensionale Darsatellung (402) des Spektrums des empfangenen Signals einerseits in Abhängigkeit von der Distanz zwischen dem Ziel und dem Radar und andererseits in Abhängigkeit von der Doppler-Frequenz zu erhalten;
- einen dritten Schritt (303) des Bestimmens der uneindeutigen Doppler-Frequenz $fdA_c$ des Ziels auf der Basis der Spektraldarstellung (402);
- einen vierten Schritt (304) des Neuzentrierens der Spektraldarstellung (402) und des Justierens der im ersten Schritt (301) durchgeführten Korrekturen auf der Basis der uneindeutigen Doppler-Frequenz $fdA_c$, um ein Radarbild (404) des Ziels zu erhalten;
- einen fünften Schritt (305) des Bestimmens des Ambiguitätsrangs der Doppler-Frequenz $fdA_c$ als den, der zu den möglichen Ambiguitätsrängen gehört, so dass das Radarbild (500) mit dem höchsten Fokussiergrad erhalten werden kann.

2. Verfahren nach Anspruch 1, **dadurch gekennzeichnet, dass** der Radarstrahl gemäß einer "Stufenfrequenz"-Wellenform erzeugt wird.

3. Verfahren nach einem der vorherigen Ansprüche, **dadurch gekennzeichnet, dass** der Fokussiergrad eines Radarbildes durch Berechnen des Kontrasts oder der Entropie des Bildes bestimmt wird.

4. Verfahren nach einem der vorherigen Ansprüche, **dadurch gekennzeichnet, dass** die möglichen Ambiguitätsränge zwischen zwei extremen Werten ausgewählt werden, die von der maximalen Geschwindigkeit des Ziels abhängig sind.

5. Verfahren nach einem der vorherigen Ansprüche, **dadurch gekennzeichnet, dass** der Schritt des Erfassens des zurückgestreuten Signals für eine begrenzte Zeitdauer ausgeführt wird.

6. Verfahren nach einem der vorherigen Ansprüche, **dadurch gekennzeichnet, dass** das Radar einen SAR- oder einen ISAR-Modus implementiert.

7. Verfahren nach einem der vorherigen Ansprüche, **dadurch gekennzeichnet, dass** sich das Radar an Bord eines beweglichen Trägers befindet.

8. Verfahren nach Anspruch 7, **dadurch gekennzeichnet, dass** der bewegliche Träger ein Luftfahrzeug ist.

9. Verfahren nach einem der vorherigen Ansprüche, **dadurch gekennzeichnet, dass** das Ziel ein Marineziel ist.

10. Impulsradar, **dadurch gekennzeichnet, dass** es Mittel umfasst, die zum Implementieren des Verfahrens nach einem der vorherigen Ansprüche ausgelegt sind.

**Claims**

1. A method for estimating the unambiguous Doppler frequency $fd_c$ of a moving target illuminated by a radar beam emitted in the form of a plurality of pulse patterns at a given repetition frequency $f_m$, each pattern comprising a plurality of elementary pulses that are evenly temporally spaced apart, each elementary pulse occupying a frequency band centred on a different frequency, said method comprising a step of acquiring the signal backscattered by said target and being **characterised in that** it further comprises the following steps:

• a first step (301), executed for each received pattern, of correcting spurious phase errors affecting each elementary pulse of a pattern, of compressing pulses of said pattern and of correcting migrations from the target by distance and by Doppler frequency, under the assumption that the Doppler frequency $fd_c$ of said target is equal to that of the point ($M_0$) on the ground towards which the radar beam points, said step (301) resulting in the generation of a two-dimensional signal (311) representing the received signal, on the one hand as a function of the distance between said target and said radar and on the other hand as a function of the received pattern;

• a second step (302) of computing a direct Fourier transform on said signal (311) originating from said first step (301), so as to obtain a two-dimensional representation (402) of the spectrum of said received signal, on the one hand as a function of the distance between said target and said radar and on the other hand as a function of the Doppler frequency;

• a third step (303) of determining the ambiguous Doppler frequency $fdA_c$ of said target on the basis of said spectral representation (402);

• a fourth step (304) of re-centring said spectral representation (402) and of adjusting said corrections carried out during said first step (301) on the basis of said ambiguous Doppler frequency $fdA_c$, so as to obtain a radar image (404) of said target;

• a fifth step (305) of determining the range of ambiguity of the Doppler frequency $fdA_c$ as being that which is among the possible ranges of ambiguity, allowing the radar image (500) with the highest degree of focusing to be obtained.

2. The method according to claim 1, **characterised in that** said radar beam is generated according to a "step-frequency" waveform.

3. The method according to any one of the preceding claims, **characterised in that** the degree of focusing of a radar image is determined by computing the contrast or the entropy of said image.

4. The method according to any one of the preceding claims, **characterised in that** the possible ranges of ambiguity are selected between two extreme values that depend on the maximum speed of said target.

5. The method according to any one of the preceding claims, **characterised in that** said step of acquiring the backscattered signal is carried out during a limited time period.

6. The method according to any one of the preceding claims, **characterised in that** said radar implements an SAR or an ISAR mode.

7. The method according to any one of the preceding claims, **characterised in that** said radar is on board a moving carrier.

8. The method according to claim 7, **characterised in that** said moving carrier is an aircraft.

9. The method according to any one of the preceding claims, **characterised in that** said target is a marine target.

10. A pulse radar, **characterised in that** it comprises means that are adapted to implement the method according to any one of the preceding claims.

FIG.1

## Signal émis

Fréquence

F+ΔF ►
B
F ►
F-ΔF ►

Amplitude

$F_0$  $F_1$  $F_2$  $F_0$  ....

Temps

n-ième répétition du motif

201

202

## Signal rétro-diffusé par un réflecteur ponctuel

Fréquence

Amplitude

$F_0$  $F_1$  $F_2$  $F_0$  ....

Temps

| Démodulation par $F_0$ | Démodulation par $F_1$ | Démodulation par $F_2$ |

**TF**   **TF**   **TF**

205

$|S_0(v)|$   $|S_1(v$   $|S_2(v$   207

⓪   ①   ②

-ΔF/2  0  ΔF/2   -ΔF/2  0  ΔF/2   -ΔF/2  0  ΔF/2

v   v   v

$|S_0(v)|$

①  ⓪  ②

F-B/2   F   F+B/

Fréquence

$|S'(v)|$

B

**bande synthétique totale**

F-B/2   F   F+B/

Fréquence

**TF⁻¹**

210

Amplitude

Ⓘ

Axe Distance

**Signal comprimé en Distance**

203

204

206

208

209

211

$$\delta x_r = \frac{c}{2B}$$

## FIG.2

301

311

302

402

303

fdA$_c$

304

404

305

FIG.3

402

— axe Distance →

▸ *fdAc*

▸ *fd₀*

404

— axe Distance →

▸ *fdAc*

# FIG.4

FIG.5

## RÉFÉRENCES CITÉES DANS LA DESCRIPTION

**Documents brevets cités dans la description**

- EP 1929091 A1

- US 5977905 A

**Littérature non-brevet citée dans la description**

- An adaptive compensation of moving target Doppler shift for airborne radar. AEROSPACE CONFERENCE, 2009 IEEE. IEEE, 07 Mars 2009, 1-6